# EUROPEAN PATENT SPECIFICATION

(11) **EP 4 313 621 B1**
(45) Date of publication and mention of the grant of the patent: **26.02.2025**
(21) Application number: 22717546.0
(22) Date of filing: 22.03.2022
(51) Int. Cl.: B60B 33/06

(54) **A ROLLING DEVICE FOR DISPLACING A WHEEL**
ROLLVORRICHTUNG ZUM VERSCHIEBEN EINES RADES
DISPOSITIF DE ROULEMENT POUR DÉPLACER UNE ROUE

(30) Priority: 22.03.2021 NO 20210364
(43) Date of publication of application: 07.02.2024
(73) Proprietor: Wheel.me AS, 0277 Oslo (NO)
(72) Inventor: BLOM-BAKKE, Andreas, 1387 ASKER (NO)
(74) Representative: Onsagers AS
(86) International application number: PCT/EP2022/057406
(87) International publication number: WO 2022/200302

(56) References cited:
- EP-A1- 2 931 528
- EP-B1- 2 931 528
- WO-A1-2015/118492
- WO-A1-2020/260551
- US-A- 5 778 488

## Description

### TECHNICAL FIELD

The present invention concerns a rolling device for mounting to or integration into a device for enabling the movement of device along a surface.

More specifically the device to be moved may be a piece of furniture, interior building element such as a wall or a door. The device to be moved may also be located out of doors for instance euro pallet or may comprise other devices that are cumbersome to move.

The invention is suitable for moving all kind of devices that is to be moved between different locations outdoors and indoors, where the movement is to occur along a surface, for instance a floor.

### BACKGROUND

Various devices and especially furniture, are provided with wheels for facilitating the movement of devices from one location to another, for instance for regrouping devices or moving a device to get access to the space the device occupies or to the device itself. EP2931528A shows an example of a rolling device.

The applicant has previously developed a rolling device capable of being integrated in devices, such as a piece of furniture, a movable wall etc., for moving the device along a surface, and which can be used by everyone regardless of physical condition and capacity to lift different devices in which the rolling device is integrated. This device is described in Norwegian Patent NO 316760 B l.

The rolling device of NO 316760 B l comprises a cylindrical sleeve device for mounting in, for example, the leg of a piece of furniture, and a piston that is movably arranged in the cylindrical sleeve device. A ball-shaped or spherical wheel is arranged in the piston. The piston is movable, with the aid of a click system comprising a spring, between an upper position and a lower position. When the piston is in the lower position, the piece of furniture can be rolled across the floor it is standing on, whilst when the piston is in the upper position, the wheel is inside the cylindrical sleeve device and the leg of the piece of furniture, in which the rolling device is arranged, thus stands on the floor. The piece of furniture thus stands in the desired position without rolling inadvertently across the floor when small forces are applied to the piece of furniture. The solution is completely mechanical

The applicant has further developed the concept and provided a rolling device with an automatic actuator system for moving a piston with a rolling element between an upper and lower position. This concept is disclosed in EP 3102429. The upper position is a passive stationary position where the wheel element is retracted in the rolling device, and the lower position is an active position for moving the rolling device along a surface. The actuator can be wirelessly controlled.

The applicant has further developed the concept and provided a rolling device disclosed in WO2020/260551.

The present invention is a further development of the concept, providing an alternative solution for the arrangement of displacing the wheel element between a retracted position where the wheel element is prevented from moving along a surface and an extended position where the wheel element is prepared for movement along the surface.

The object of the present invention is therefore to provide a rolling device capable of being attached to or integrated in devices, providing an alternative to prior art solutions represented by a simple and reliable arrangement for moving the wheel between a retracted and an extended position.

It has further been an object of the invention to find a solution that is simple to control and with a more compact construction than prior art solutions.

The object of the invention is achieved by means of the features of the patent claims.

These and other characteristics of the invention will be clear from the following description of an exemplary embodiment, given as a non-restrictive example, with reference to the attached drawings.

A rolling device for a device to enable the moving of the device along a surface comprises in one embodiment a wheel axle carrying a wheel, a lead screw with a nut, at least one axle support member rotatably connected in one end in a fixed pivot point and in the other end connected to the lead screw nut. The wheel has two side faces. Each axle support member supports an end portion of the wheel axle. The rolling device is characterized by a drive motor connected to the lead screw to rotate the lead screw for displacing the lead screw nut and thereby displacing the wheel between an extended position and a retracted position, wherein the lead screw is arranged tangentially to the rotational direction of the wheel between the two side faces of the wheel at a distance from the wheel axle that is larger than the radius of the wheel

In one embodiment, there are two axle support members arranged parallel to the side faces of the wheel and two spacers connect one end of the axle support members to the lead screw nut

A lead screw, also known as a power screw or translation screw, is a screw used as a linkage in a machine, to translate turning motion into linear motion. Because of the large area of sliding contact between their male and female members, screw threads have larger frictional energy losses compared to other linkages. They are not typically used to carry high power, but more for intermittent use in low power actuator and positioner mechanisms.

The drive motor may have two driving directions, where a first driving direction is for displacement of the wheel into the retracted position, and a second driving direction for displacement of the wheel into the extended position. A gear arrangement may be arranged in engagement with the drive motor and the lead screw to transfer rotation from the motor to the lead screw and thereby rotating the screw, causing up or downwards movement of the nut and thus the wheel.

To facilitate tilting of the lead screw, the lead screw may be flexible connected to the housing.

In one embodiment a second drive motor is located within the wheel for rotation of the wheel relative to the wheel axle.

The rolling device may comprise a control unit for controlling the rolling device. The control unit can receive control signals for operation of the first and/or second drive motor from a remote control, computer, cell phone or by voice-activation. It is also possible that the control unit comprises software for autonomous control of the rolling device.

The rolling device may comprise or be arranged in a housing. The housing may be arranged to enclose some of, all or most of the parts of the rolling device, such as wheel axle, the wheel, the lead screw, the nut, the axle support member and the motor. In this embodiment, the fixed pivot point may be a part of the housing or may be accommodated in the housing. The rolling device may be arranged in the housing in such a sway that in the extended position at least a portion of the wheel 11 projects outside the housing.

### BRIEF DESCRIPTION OF THE DRAWINGS

In the following, embodiments of the present invention will be described in detail with reference to the enclosed drawings, where
Fig. 1 is a schematic side view of the rolling device in accordance with the invention with the wheel element in retracted position.
Fig. 2 is a schematic side view of the rolling device as shown in fig 1 during retraction or projection.
Fig. 3 is a schematic side view of the rolling device as shown in fig 1 in the projected position.
Fig. 4 is a perspective view of a rolling device.

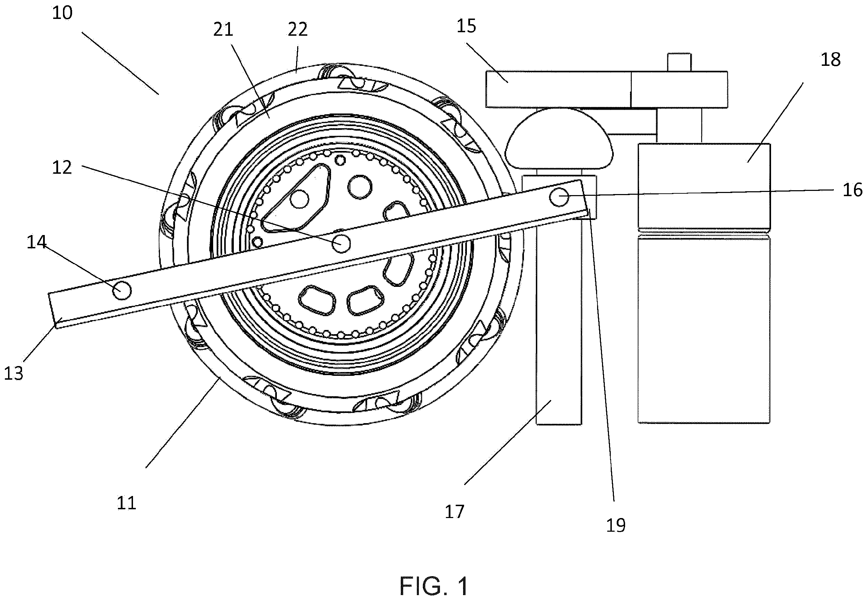

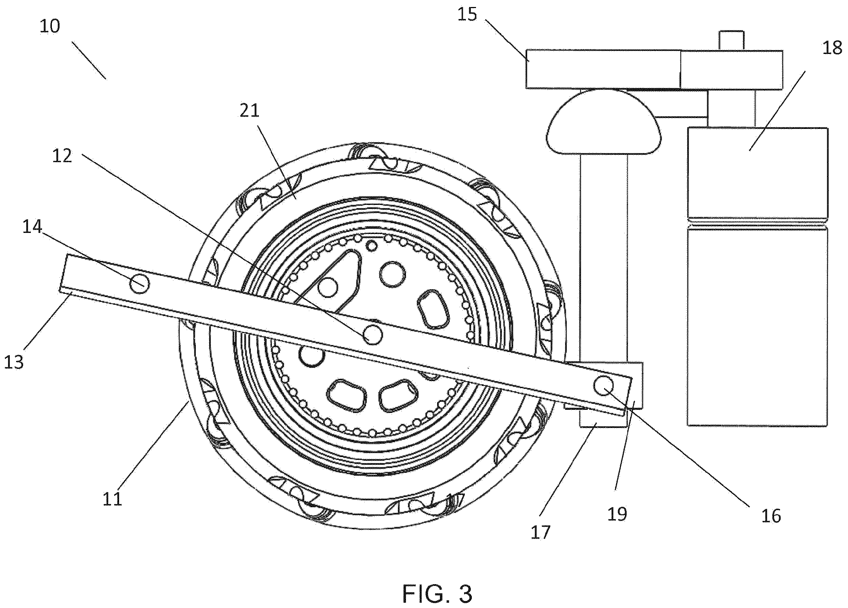

A rolling device 10 that can be mounted or integrated into a device or object to be moved is illustrated in the figures. The rolling device comprises a wheel 11 and is configured to lift and lower the wheel 11 to different positions. For example, can the wheel 11 be retracted into a housing so that the housing rests on a surface, or the wheel can be projected at least partly out of a housing so that the rolling device 10 can be used to move the device/object. Figures 1 to 3 shows the rolling device 10 in three different positions between the retracted position, illustrated in figure 1 and the projected position in figure 3.

The rolling device 10 comprises a wheel axle 12 carrying the wheel 11. The wheel has two side faces 21 connected to the rim 22 at each side of the wheel 11 and the distance between the side faces 21 defines the width of the wheel 11. The wheel may be any kind of wheel. In the figures the wheel is a mecanum wheel with a series of rubberized external rollers obliquely attached to the whole circumference of its rim, but the invention is not limited to this.

The rolling device 10 further comprises a lead screw 17 with a nut 19. Two axle support members 13 are rotatably connected in one end to a fixed pivot point 14 and in the other end 16 is connected to a lead screw nut 19. The axle support members 13 are longitudinal elements having means for rotational connecting to the fixed pivot point, the wheel axle 12 and the lead screw nut 19. When the lead screw is rotated, the nut moves at the lead screw in one direction or the other according to the rotation direction of the lead screw. As the axle support member 13 is connected in one end to the lead screw nut 19, rotating the lead screw causes movement of the axle support member 13. Each axle support member 13 supports an end portion of the wheel axle 12, and thus the wheel will also experience a movement when the lead screw is rotated.

A drive motor in a housing 18 is connected to the lead screw 17 for rotating the lead screw 17, thereby displacing the lead screw nut 19 and the wheel 11 between an extended position and a retracted position. A gear arrangement 15 is arranged in engagement with the motor 18 and the lead screw 17 to transfer rotation from the motor 18 to the lead screw 17.

The lead screw 17 is arranged tangentially to the rotational direction of the wheel 11 centrally placed between the two side faces 21 of the wheel 11. The lead screw 17 is placed at a distance from the wheel axle 12 which is larger than the radius of the wheel, thus being arranged in front or in the rear of the wheel 11, depending on the direction of movement. The two axle support members are arranged parallel to the side faces 21 of the wheel 11 and two spacers 20 connect the end of the axle support members 13 to the lead screw nut 19.

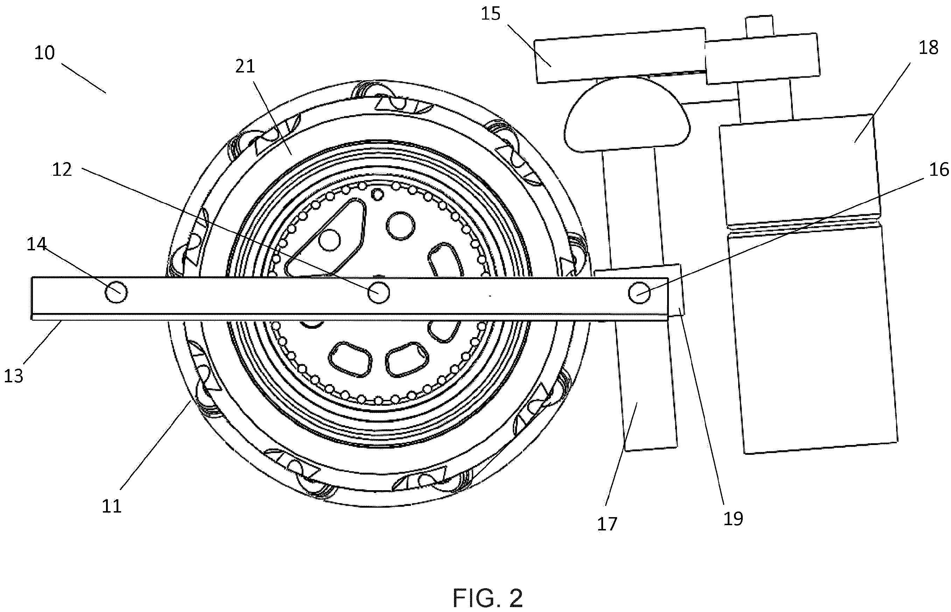

Figure 1 illustrates the state where the wheel is in the retracted position. In this state, the axle support member 13 inclines upwards with the fixed pivot point 14 lower than the wheel axle 12. When the lead screw 17 is rotated by means of the drive motor 18, the wheel is displaced according to the direction of rotation. The drive motor has a first driving direction for displacement of the wheel into the retracted position, and a second driving direction for displacement of the wheel 11 into the extended position. In figure 2 the motor has been operated in the second driving direction, the lead screw nut has moved downwards on the lead screw and the wheel 11 has been displaced in the direction of the extended position. The end 16 of the axle support member 13 follows a curved path and thus the connection between the axle support member 13 and the lead screw nut 19 also follows a curved path. When the axle support member 13 has moved from the upwards inclining position to the horizontal position the lead screw nut has experienced a corresponding curved movement. To accommodate this movement, the lead screw is flexible arranged, for example connected flexible to a housing. The lower end of the lead screw 17 is loose and not connected to the housing, allowing the lead screw to tilt. In figure 2, both the lead screw 17 and the motor housing 18 have been tilted slightly due to the curved path of the lead screw nut 19.

In figure 3 the motor has continued operating in the second driving direction, and the lead screw nut 19 has moved further downwards on the lead screw. This movement has moved the wheel 11 to the extended position. In this state the axle support member 13 inclines downwards with the fixed pivot point 14 being higher than the wheel axle 12. The end 16 of the axle support member 13 has followed the curved path further, causing the lead screw 17 to take an upright, mainly vertical position.

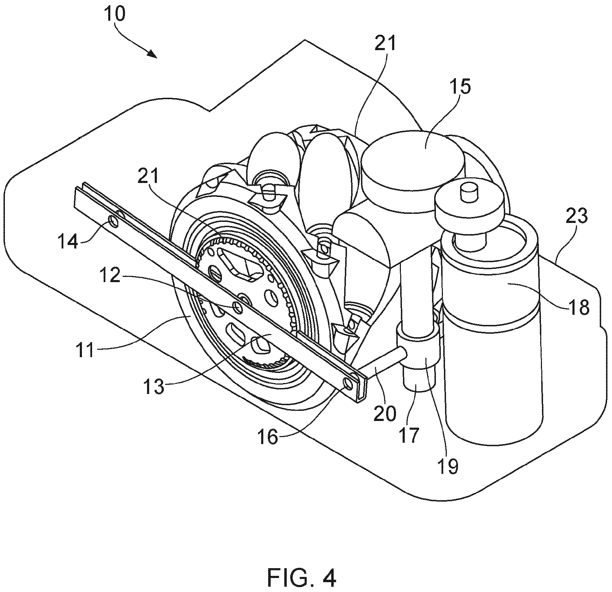

Figure 4 show the rolling device 10 in a perspective view. In this embodiment the rolling device 10 comprises a housing 23. The housing 23 accommodates most of the parts of the rolling device and provides a connection of the fixed pivot point 14. The housing may for example provide support for the device or object to be moved. When the wheel is moved up and down, it will in the extended position at least partially project outside the housing, while in the retracted position be fully retracted into the housing.

## Claims

1. A rolling device (10) for a device to enable the moving of the device along a surface, where the rolling device comprises:
- a wheel axle (12) carrying a wheel (11), where the wheel has two side faces (21),
- a lead screw (17) with a nut (19),
- at least one axle support member (13) rotatably connected in one end in a fixed pivot point (14) and in the other end connected to the lead screw nut (19),
wherein each axle support member (13) supports an end portion of the wheel axle (12),
and **characterized by**
- a drive motor (18) connected to the lead screw (17) to rotate the lead screw (17) for displacing the lead screw nut (19) and thereby displacing the wheel (11) between an extended position and a retracted position,
wherein the lead screw (17) is arranged tangentially to the rotational direction of the wheel (11) between the two side faces (21) of the wheel at a distance from the wheel axle larger than the radius of the wheel.

2. A rolling device (10) according to claim 1, comprising two axle support members arranged parallel to the side faces (21) of the wheel (11) and two spacers (20) connecting one end of the axle support members (13) to the lead screw nut (19).

3. A rolling device (10) in accordance with claim 1 or 2, wherein the drive motor has a first driving direction for displacement of the wheel into the retracted position, and a second driving direction for displacement of the wheel (11) into the extended position.

4. A rolling device (10) according to one of the previous claims, comprising a gear arrangement (15) arranged in engagement with the motor and the lead screw to transferring rotation from the motor (18) to the lead screw (17).

5. A rolling device (10) according to one of the previous claims, where the lead screw is flexible connected to the housing.

6. A rolling device (10) according to one of previous claims, wherein a second drive motor is located within the wheel (11) for rotation of the wheel (11) relative to the wheel axle (12).

7. A rolling device (10) according to one of the previous claims, wherein a control unit controls the rolling device and the control unit receives control signals for operation of the first and/or second drive motor from a remote control, computer, cell phone or by voice-activation.

8. A rolling device (10) according to one of the previous claims comprising a housing and where the fixed pivot point (14) in is accommodated in the housing.

9. A rolling device (10) according to claim 8, where the housing accommodates the wheel axle (12), the wheel (11), the lead screw (17), the nut (19), the axle support member (13) and the motor.

10. A rolling device (10) according to one of claims 8 or 9, where in the extended position at least a portion of the wheel (11) projects outside the housing.

## Patentansprüche

1. Eine Rollvorrichtung (10) für eine Vorrichtung, um das Bewegen der Vorrichtung entlang einer Oberfläche zu ermöglichen, wobei die Rollvorrichtung umfasst:
- eine Radachse (12), die ein Rad (11) trägt, wobei das Rad zwei Seitenflächen (21) aufweist,
- eine Leitspindel (17) mit einer Mutter (19),
- mindestens ein Achsenträgerelement (13), das an einem Ende drehbar mit einem festen Drehpunkt (14) verbunden ist und am anderen Ende mit der Leitspindelmutter (19) verbunden ist,
wobei jedes Achsenträgerelement (13) einen Endabschnitt der Radachse (12) stützt,
und **gekennzeichnet durch**
- einen mit der Leitspindel (17) verbundenen Antriebsmotor (18) zum Drehen der Leitspindel (17), um die Leitspindelmutter (19) zu verschieben und dadurch das Rad (11) zwischen einer ausgefahrenen und einer eingefahrenen Position zu bewegen,
wobei die Leitspindel (17) tangential zur Drehrichtung des Rades (11) zwischen den beiden Seitenflächen (21) des Rades in einem Abstand von der Radachse angeordnet ist, der größer ist als der Radius des Rades.

2. Eine Rollvorrichtung (10) nach Anspruch 1, umfassend zwei Achsenträgerelemente, die parallel zu den Seitenflächen (21) des Rades (11) angeordnet sind, und zwei Distanzstücke (20), die ein Ende der Achsenträgerelemente (13) mit der Leitspindelmutter (19) verbinden.

3. Eine Rollvorrichtung (10) nach Anspruch 1 oder 2, wobei der Antriebsmotor eine erste Antriebsrichtung für die Verschiebung des Rades in die eingefahrene Position und eine zweite Antriebsrichtung für die Verschiebung des Rades (11) in die ausgefahrene Position aufweist.

4. Eine Rollvorrichtung (10) nach einem der vorhergehenden Ansprüche, umfassend eine Getriebeanordnung (15), die im Eingriff mit dem Motor und der Leitspindel angeordnet ist, um die Rotation vom Motor (18) auf die Leitspindel (17) zu übertragen.

5. Eine Rollvorrichtung (10) nach einem der vorhergehenden Ansprüche, wobei die Leitspindel flexibel mit dem Gehäuse verbunden ist.

6. Eine Rollvorrichtung (10) nach einem der vorhergehenden Ansprüche, wobei ein zweiter Antriebsmotor innerhalb des Rades (11) zur Drehung des Rades (11) relativ zur Radachse (12) angeordnet ist.

7. Eine Rollvorrichtung (10) nach einem der vorhergehenden Ansprüche, wobei eine Steuereinheit die Rollvorrichtung steuert und die Steuereinheit Steuerbefehle zum Betrieb des ersten und/oder zweiten Antriebsmotors von einer Fernbedienung, einem Computer, einem Mobiltelefon oder durch Sprachaktivierung empfängt.

8. Eine Rollvorrichtung (10) nach einem der vorhergehenden Ansprüche, umfassend ein Gehäuse, wobei der feste Drehpunkt (14) im Gehäuse untergebracht ist.

9. Eine Rollvorrichtung (10) nach Anspruch 8, wobei das Gehäuse die Radachse (12), das Rad (11), die Leitspindel (17), die Mutter (19), das Achsenträgerelement (13) und den Motor aufnimmt.

10. Eine Rollvorrichtung (10) nach einem der Ansprüche 8 oder 9, wobei in der ausgefahrenen Position mindestens ein Teil des Rades (11) außerhalb des Gehäuses hervorsteht.

## Revendications

1. Dispositif de roulement (10) pour un dispositif permettant le déplacement du dispositif le long d'une surface, le dispositif de roulement comprenant:
- un essieu de roue (12) portant une roue (11), où la roue a deux faces latérales (21),
- une vis-mère (17) avec un écrou (19),
- au moins un élément de support d'essieu (13) relié de manière rotative à une extrémité à un point de pivot fixe (14) et relié à l'autre extrémité à l'écrou de la vis-mère (19),
dans lequel chaque élément de support d'essieu (13) supporte une partie d'extrémité de l'essieu de roue (12)
et **caractérisé par**
- un moteur d'entraînement (18) relié à la vis-mère (17) pour faire tourner la vis-mère (17) afin de déplacer l'écrou de la vis-mère (19) et ainsi déplacer la roue (11) entre une position étendue et une position rétractée,
dans lequel la vis-mère (17) est disposée tangentiellement à la direction de rotation de la roue (11) entre les deux faces latérales (21) de la roue à une distance de l'essieu de roue supérieure au rayon de la roue.

2. Le dispositif de roulement (10) selon la revendication 1, comprenant deux éléments de support d'essieu disposés parallèlement aux faces latérales (21) de la roue (11) et deux entretoises (20) reliant une extrémité des éléments de support d'essieu (13) à l'écrou de la vis-mère (19).

3. Le dispositif de roulement (10) selon la revendication 1 ou 2, dans lequel le moteur d'entraînement présente une première direction d'entraînement pour le déplacement de la roue dans la position rétractée, et une seconde direction d'entraînement pour le déplacement de la roue (11) dans la position étendue.

4. Le dispositif de roulement (10) selon l'une des revendications précédentes, comprenant un agencement d'engrenages (15) disposé en prise avec le moteur et la vis-mère pour transférer la rotation du moteur (18) à la vis-mère (17).

5. Le dispositif de roulement (10) selon l'une des revendications précédentes, dans lequel la vis-mère est reliée de manière flexible au boîtier.

6. Le dispositif de roulement (10) selon l'une des revendications précédentes, dans lequel un deuxième moteur d'entraînement est situé à l'intérieur de la roue (11) pour la rotation de la roue (11) par rapport à l'essieu de roue (12).

7. Le dispositif de roulement (10) selon l'une des revendications précédentes, dans lequel une unité de commande commande le dispositif de roulement et l'unité de commande reçoit des signaux de commande pour le fonctionnement du premier et/ou du deuxième moteur d'entraînement à partir d'une télécommande, d'un ordinateur, d'un téléphone portable ou par activation vocale.

8. Le dispositif de roulement (10) selon l'une des revendications précédentes comprenant un boîtier et dans lequel le point de pivot fixe (14) est logé dans le boîtier.

9. Le dispositif de roulement (10) selon la revendication 8, dans lequel le boîtier accueille l'essieu de roue (12), la roue (11), la vis-mère (17), l'écrou (19), l'élément de support d'essieu (13) et le moteur.

10. Le dispositif de roulement (10) selon l'une des revendications 8 ou 9, dans lequel dans la position étendue au moins une partie de la roue (11) fait saillie à l'extérieur du boîtier.
